Europäisches Patentamt

European Patent Office

Office européen des brevets

(19)

(11) **EP 0 785 414 B1**

(12) **FASCICULE DE BREVET EUROPEEN**

(45) Date de publication et mention
de la délivrance du brevet:
**23.10.2002  Bulletin 2002/43**

(51) Int Cl.⁷: **G01C 21/00**, F41G 7/34

(21) Numéro de dépôt: **97400001.0**

(22) Date de dépôt: **02.01.1997**

(54) **Procédé et dispositif pour déterminer un décalage entre la position effective et une position prescrite d'un aéronef**

Verfahren und Vorrichtung zum Bestimmen einer Abweichung zwischen der Istposition und der Sollposition eines Flugkörpers

Method and device for determining a shift between the actual position and the planned position of an aircraft

(84) Etats contractants désignés:
**BE CH DE ES GB IT LI NL SE**

(30) Priorité:  **17.01.1996  FR 9600464**

(43) Date de publication de la demande:
**23.07.1997   Bulletin 1997/30**

(73) Titulaire: **AEROSPATIALE MATRA**
**75016 Paris (FR)**

(72) Inventeurs:
• **Barrat, Benoît**
**91400 Orsay (FR)**

• **Mazar, Bruno**
**75010 Paris (FR)**
• **Grenier, Gilles**
**78320 Le Mesnil Saint Denis (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 396 867          EP-A- 0 427 431**
**FR-A- 2 468 883          FR-A- 2 648 904**

**Description**

La présente invention concerne un procédé pour déterminer un éventuel décalage entre la position effective et une position prescrite d'un aéronef, afin de pouvoir réaliser si nécessaire un recalage en position dudit aéronef, ainsi qu'un dispositif pour la mise en oeuvre de ce procédé.

De façon connue, le décalage entre la position effective d'un aéronef, par exemple un missile, et une position prescrite de cet aéronef, peut être déterminé en utilisant les résultats de l'appariement entre une carte préétablie représentant au moins une partie du territoire survolé par l'aéronef et une image de ladite partie du territoire, formée par un générateur d'images monté à bord dudit aéronef.

On sait que la durée est un facteur essentiel dans une telle mise en oeuvre, surtout lorsqu'un décalage en position est détecté, puisque dans ce cas un recalage de la position de l'aéronef est nécessaire pour que ce dernier atteigne la cible visée.

En plus de la durée, la précision de la prise d'image et la précision de l'appariement sont également des facteurs importants pour la réussite de la mission de l'aéronef.

Par le document FR-2 648 904, on connaît un dispositif pour déterminer la position d'un aéronef par rapport au terrain qu'il survole, comprenant des moyens de balayage optique pour former, dans un repère lié audit aéronef, une image à deux dimensions dudit terrain, des moyens de mémorisation de données cartographiques relatives audit terrain, et des moyens pour comparer ladite image auxdites données cartographiques mémorisées, afin d'en déduire ladite position. Ces moyens de comparaison comprennent :

- des moyens pour, en réponse à l'information de cap mesurée par les instruments de bord dudit aéronef et auxdites données cartographiques mémorisées, estimer la direction apparente, dans ledit repère, d'au moins une voie de communication dudit terrain ;
- des moyens pour projeter, parallèlement à la direction estimée et sur une droite perpendiculaire à cette direction estimée passant par l'origine dudit repère, ladite image de façon à obtenir une image projetée à une dimension ;
- des moyens pour déterminer, dans ledit repère, les coordonnées de l'extremum d'intensité de ladite image projetée ; et
- des moyens pour calculer ladite position en réponse auxdites données cartographiques mémorisées et aux coordonnées dudit extremum, considéré comme appartenant à ladite voie de communication.

Par ailleurs, par le document EP-0 396 867, on connaît un système de navigation d'un aéronef, permettant de déterminer la position dudit aéronef, à partir d'une image du terrain survolé. Ce document EP-0 396 867 prévoit, à cet effet, un traitement d'image particulier qui consiste successivement :

- à identifier des objets particuliers sur l'image, tels que des forêts ou des habitations ;
- à caractériser chacun de ces objets à partir d'attributs de ces derniers, comme la classe de l'objet, la position et la longueur du vecteur de limitation, la position du centre, et à décrire ces objets à partir des caractéristiques correspondantes ; et
- à comparer la suite de ces caractéristiques aux caractéristiques d'une image de référence, pour corriger le cas échéant le système de navigation.

Le principe de base de ce mode de traitement connu consiste donc à rechercher des propriétés (caractéristiques) d'objets de l'image. Pour ce faire, ce document connu prévoit un traitement qui consiste :

- à transformer l'image en une pluralité de structures à 2x2 coefficients, en utilisant des paramètres particuliers tels que la moyenne de la distance, un gradient de surface ou la texture ;
- à grouper ces structures tant que l'un desdits paramètres est vérifié ; et
- à refaire le même groupement, en utilisant un autre paramètre, ...

La présente invention concerne un procédé pour déterminer, de façon rapide, précise et autonome, un éventuel décalage de la position effective d'un aéronef par rapport à une position prescrite, à partir d'une carte préétablie représentant au moins une partie du territoire survolé par l'aéronef et d'une image de ladite partie du territoire, formée par un générateur d'images monté à bord dudit aéronef. Un tel décalage permet, lorsqu'il est déterminé, d'effectuer le recalage en position de l'aéronef.

Selon l'invention, ledit procédé est remarquable en ce que :

- on fait suivre à l'aéronef une direction de vol prédéfinie par rapport audit territoire survolé ;
- on détermine la vitesse et la hauteur dudit aéronef ;
- en fonction de la vitesse et de la hauteur ainsi déterminées, on effectue une pluralité de balayages successifs du territoire survolé, au moyen dudit générateur d'images, transversalement à ladite direction de vol, alternativement dans les deux sens, de sorte que ledit générateur d'images, engendre, lors de chaque balayage, une bande imagée telle que deux bandes imagées successives correspondent à deux zones adjacentes dudit territoire dans ladite direction de vol, et que les différentes zones ainsi imagées représentent la partie du territoire à imager ;

- pour chacune desdites bandes imagées ainsi engendrées, on effectue, au fur et à mesure de leur génération, un traitement d'images de manière à les rendre compatibles avec ladite carte préétablie, pour lequel traitement d'images on effectue un plaquage de segments obtenus à partir de contours de ladite bande imagée, contours qui correspondent aux transitions les plus importantes des niveaux de gris des pixels de la bande imagée correspondante, ledit plaquage consistant à placer lesdits segments dans un plan identique au plan de la carte préétablie, portant des segments semblables ;
- on groupe ensemble les bandes imagées ainsi traitées de manière à former une image globale traitée ;
- on effectue un appariement entre ladite image globale traitée et ladite carte préétablie, en mettant en correspondance lesdits segments de ladite image avec des segments semblables de la carte préétablie ; et
- à partir dudit appariement, on détermine le cas échéant le décalage de la position effective dudit aéronef par rapport à ladite position prescrite.

Ainsi, grâce à l'invention, ledit procédé met en oeuvre, non seulement un mode de balayage avantageux qui utilise le défilement du territoire survolé, au-dessous du générateur d'images, lors du vol de l'aéronef, comme un balayage intrinsèque dudit territoire suivant la direction de vol, mais de plus il réalise les traitements d'images au fur et à mesure de la génération desdites bandes imagées. Ce mode de traitement d'images proposé est donc directement adapté au type de balayage utilisé, ce qui permet de réduire considérablement la durée de mise en oeuvre dudit procédé.

Le gain de temps réalisé par l'invention permet ainsi d'augmenter considérablement le pourcentage de réussite de la mission, surtout lorsque la mise en oeuvre doit être réalisée rapidement, comme c'est par exemple le cas pour un missile lors de son approche terminale d'une cible à détruire.

De plus, l'ensemble des pixels de l'image formée par le mode de prise d'images utilisé couvre, en projection sur le sol, une surface élémentaire homogène, ce qui permet notamment un traitement d'images précis et facilité, particulièrement approprié à ladite détermination d'un éventuel décalage en position.

De façon avantageuse, pour effectuer lesdits balayages, on détermine le site et le débattement angulaire de la ligne de visée dudit générateur d'images, en fonction de la hauteur et de la vitesse de l'aéronef, de la vitesse et de la période de balayage dudit générateur d'images, et de la largeur de la partie du territoire à imager, transversalement à la direction de vol.

De plus, avantageusement, ladite direction de vol prédéfinie de l'aéronef est rectiligne et parallèle au plan moyen du territoire survolé, et la vitesse de l'aéronef est constante.

En outre, de préférence, ledit générateur d'images est un senseur optronique permettant d'observer le territoire survolé dans une bande spectrale déterminée, située par exemple dans l'infrarouge, ce qui permet une mise en oeuvre non détectable du procédé conforme à l'invention, puisque ledit générateur d'images est alors du type "passif".

Par ailleurs, de façon avantageuse :

- lors du traitement d'images d'une bande imagée pour déterminer lesdits segments, successivement :

  a) on effectue une extraction de contours de ladite bande imagée, les contours correspondant aux transitions les plus importantes des niveaux de gris des pixels de la bande imagée ;
  b) on effectue un seuillage de ladite bande imagée de manière à ne conserver que les contours dont le niveau de gris est supérieur à une valeur déterminée ;
  c) on effectue un chaînage consistant à relier ensemble les contours ainsi conservés ; et
  d) on effectue une polygonalisation afin de transformer lesdits contours en segments ;

- lors dudit appariement, comme indiqué précédemment, on met en correspondance les segments de l'image avec des segments semblables de la carte préétablie, ce qui correspond à identifier des amers, c'est-à-dire des objets caractéristiques, fixes et visibles du territoire, servant d'éléments de repère et situés sur ladite carte préétablie.

La présente invention concerne également un dispositif pour la mise en oeuvre du procédé précité.

Selon l'invention, ledit dispositif comportant :

- un générateur d'images à balayage ;
- des premiers moyens de commande pour faire suivre à l'aéronef une direction de vol prédéfinie ;
- des seconds moyens de commande pour commander le balayage dudit générateur d'images transversalement à la direction de vol de l'aéronef ; et
- une unité de traitement d'images pour traiter les bandes imagées engendrées par le générateur d'images, ladite unité de traitement d'images comportant des moyens de calcul pour déterminer le cas échéant le décalage de la position effective de l'aéronef par rapport à la position prescrite,

est remarquable en ce que ladite unité d'images comporte de plus :

- des moyens auxiliaires de traitement d'images pour le traitement immédiat par segmentation au fur et à mesure de leur génération des bandes imagées engendrées par le générateur d'images ;

- des moyens de groupement pour grouper ensemble les bandes imagées traitées, en une image globale traitée ; et
- des moyens d'appariement pour effectuer l'appariement entre ladite image globale traitée et la carte préétablie.

Ainsi, grâce à l'invention, ledit dispositif présente notamment les avantages suivants :

- une fiabilité élevée,
- un coût réduit, et
- une autonomie totale.

De plus, de façon avantageuse, lesdits moyens auxiliaires de traitement d'images comprennent :

- des moyens d'extraction de contours ;
- des moyens de seuillage ;
- des moyens de chaînage ;
- des moyens de polygonalisation ; et
- des moyens de plaquage.

Les figures du dessin annexé feront bien comprendre comment l'invention peut être réalisée. Sur ces figures, des références identiques désignent des éléments semblables.

La figure 1 illustre schématiquement un aéronef porteur d'un dispositif conforme à l'invention.

La figure 2 est le schéma synoptique d'un dispositif conforme à l'invention.

La figure 3 est le schéma synoptique d'une unité de traitement d'images du dispositif conforme à l'invention de la figure 2.

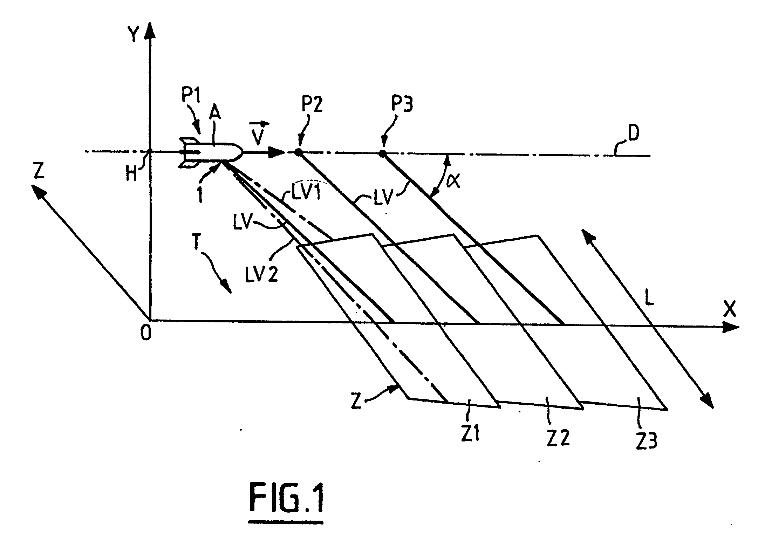

Le dispositif 1 conforme à l'invention est monté, tel que représenté sur la figure 1, sur un aéronef A, par exemple un missile, survolant un territoire T, à altitude H basse, de préférence entre un et quelques centaines de mètres. La position P1 dudit aéronef A est définie dans un repère OXYZ, dans lequel :

- O est un point dudit territoire T ;
- OX et OZ sont deux directions orthogonales qui définissent un plan horizontal correspondant au plan moyen dudit territoire T ; et
- OY représente la direction verticale.

Ledit dispositif 1 conforme à l'invention est destiné à déterminer le décalage éventuel entre la position effective P1 dudit aéronef A et une position prescrite, de manière à pouvoir réaliser, si nécessaire, le recalage en navigation dudit aéronef A.

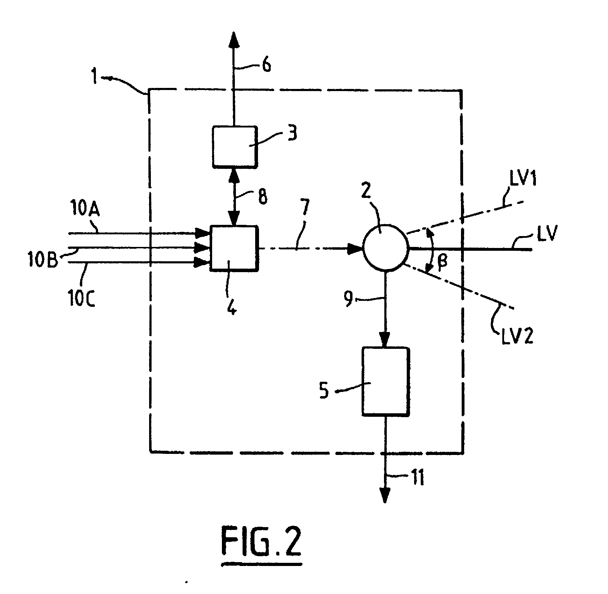

A cet effet, ledit dispositif 1 comporte, selon l'invention, tel que représenté schématiquement sur la figure 2 et précisé ci-après :

- un générateur d'images 2 ;

- des moyens de commande 3 de l'aéronef A ;
- des moyens de commande 4 du générateur d'images 2 ; et
- une unité de traitement d'images 5.

Plus précisément, selon l'invention :

- les moyens de commande 3 qui sont reliés par une liaison 6 à des moyens de navigation connus et non représentés de l'aéronef A, par exemple le calculateur de navigation dudit aéronef, font suivre audit aéronef A une direction de vol prédéfinie D qui est rectiligne et parallèle au plan moyen OXZ du territoire T survolé. Sur la figure 1, dans un but de simplification du dessin, ladite direction de vol D est supposée parallèle à l'axe OX ;
- le générateur d'images 2 observe le territoire survolé T selon une ligne de visée LV présentant un site $\alpha$ par rapport à la direction de vol D, et il est susceptible d'engendrer des images du territoire T ainsi observé. Selon l'invention, ledit générateur d'images 2 est susceptible d'effectuer un balayage de sa ligne de visée LV, transversalement à la direction de vol D, entre deux positions extrêmes LV1 et LV2 formant un angle de débattement $\beta$, et de réaliser simultanément une prise d'images ;
- les moyens de commande 4, qui sont reliés par des liaisons 7 et 8 respectivement audit générateur d'images 2 et auxdits moyens de commande 3, commandent le balayage dudit générateur d'images 2 transversalement à ladite direction de vol D, alternativement dans les deux sens ; et
- l'unité de traitement d'images 5 est reliée par une liaison 9 audit générateur d'images 2 pour traiter les images engendrées par ce dernier.

Selon l'invention, ledit générateur d'images 2 engendre, lors de chaque balayage, une bande imagée telle que deux bandes imagées successives correspondent à deux zones adjacentes Z1 et Z2 ou Z2 et Z3 dudit territoire T dans ladite direction de vol D, et que les différentes zones Z1, Z2 et Z3 ainsi imagées représentent la partie Z du territoire T à imager.

L'ensemble des pixels de l'image ainsi formée couvre, en projection au sol, une surface élémentaire homogène, ce qui est particulièrement avantageux lors de la mise en oeuvre d'un recalage en navigation de l'aéronef A, comme on le verra ci-dessous.

Lesdites bandes imagées des zones Z1, Z2 et Z3 sont obtenues respectivement pour des positions P1, P2 et P3 de l'aéronef, tel que représenté sur la figure 1.

Pour réaliser un tel balayage, les moyens de commande 4 déterminent et commandent, pour le générateur d'images 2 :

- le site $\alpha$ de la ligne de visée LV ; et
- le débattement angulaire $\beta$ de ladite ligne de visée LV, à partir des informations suivantes :

- la hauteur H et la vitesse $\vec{V}$ de l'aéronef A, reçues par une liaison 10A reliée à un moyen approprié non représenté ou par la liaison 8 ;
- la vitesse de balayage et la période de balayage dudit générateur d'images 2, qui sont, soit enregistrées dans lesdits moyens de commande 4, soit reçues par une liaison 10B reliée à un moyen approprié ; et
- la largeur L de la partie Z du territoire à imager, transversalement à la direction de vol D, reçue par une liaison 10C ou enregistrée dans lesdits moyens de commande 4.

On notera que :

- d'une part, le site α doit être le plus élevé possible, afin de remédier aux défauts de planéité du territoire survolé T et d'obtenir une grande précision dans les traitements des images formées ; et
- d'autre part, la largeur L des bandes imagées Z1 à Z3 doit être la plus grande possible afin de garantir la présence dans l'image formée d'un nombre élevé d'amers précisés ci-dessous.

Par conséquent, on doit déterminer le meilleur compromis entre le site α et le débattement angulaire β de la ligne de visée LV pour satisfaire les exigences précédentes.

Par ailleurs, il faut, de plus, trouver le meilleur compromis entre la durée de traitement d'images et la longueur de la partie Z du territoire T à imager, dans la direction de vol D.

Pour ce faire, ledit générateur d'images 2 est, de préférence, un senseur optronique observant le territoire T dans une bande de fréquences prédéfinie, par exemple dans l'infrarouge, ce qui permet d'obtenir une furtivité maximale, et le balayage dudit générateur d'images 2 est réalisé par exemple au moyen d'un système connu à miroirs.

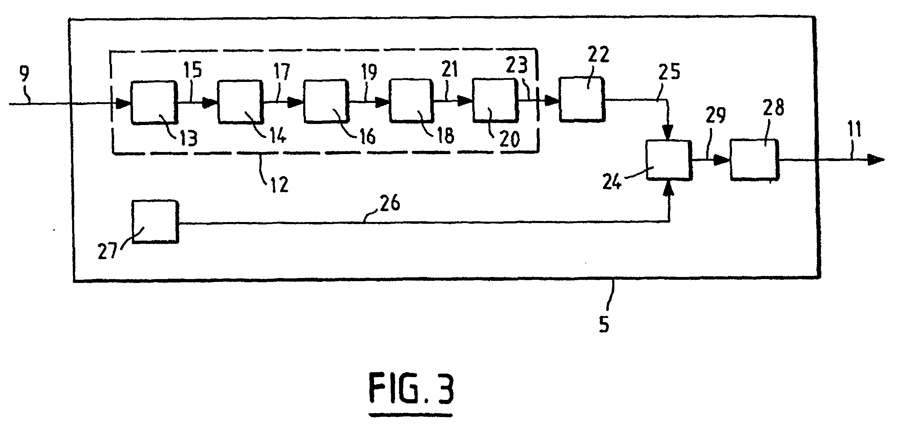

Selon l'invention, ladite unité de traitement d'images 5 comporte, tel que représenté sur la figure 3, des moyens auxiliaires de traitement d'images 12 qui traitent, au fur et à mesure de leur génération, les bandes imagées engendrées par le générateur d'images 2 et reçues par la liaison 9.

A cet effet, lesdits moyens auxiliaires de traitement d'images 12 comprennent, selon l'invention :

- des moyens 13 reliés à la liaison 9, pour effectuer une extraction de contours de ladite bande imagée non représentée, lesdits contours correspondant aux transitions les plus importantes des niveaux de gris des pixels des bandes imagées ;
- des moyens 14 reliés par une liaison 15 auxdits moyens 13, pour effectuer un seuillage desdites bandes imagées de manière à ne conserver que les contours dont le niveau de gris est supérieur à une valeur déterminée ;

- des moyens 16 reliés par une liaison 17 auxdits moyens 14, pour effectuer un chaînage consistant à relier ensemble les contours conservés ;
- des moyens 18 reliés par une liaison 19 auxdits moyens 16, pour effectuer une polygonalisation afin de transformer lesdits contours en segments ; et
- des moyens 20 reliés par une liaison 21 auxdits moyens 18, pour effectuer un plaquage desdits segments consistant à placer lesdits segments dans un plan identique à celui portant des segments semblables d'une carte préétablie, utilisée dans le présent traitement et précisée ci-dessous.

Selon l'invention, ladite unité de traitement d'images 5B comporte de plus :

- des moyens 22 reliés par une liaison 23 auxdits moyens 20, pour grouper ensemble les bandes imagées traitées de la manière décrite précédemment, afin de former une image globale traitée ;
- des moyens 24 reliées, d'une part, par l'intermédiaire d'une liaison 25 aux moyens 22 et, d'autre part, par l'intermédiaire d'une liaison 26 à une mémoire 27 qui stocke ladite carte préétablie du territoire T survolé, précisée ci-dessous, lesdits moyens 24 effectuant un appariement entre ladite carte préétablie et l'image globale traitée. Plus précisément, lesdits moyens 24 réalisent la mise en correspondance des segments de l'image globale traitée avec des segments identiques de ladite carte préétablie ; et
- des moyens 28 reliés par une liaison 29 auxdits moyens 24 et déterminant, à partir de l'appariement réalisé par les moyens 24, le cas échéant le décalage de la position effective P1 de l'aéronef A par rapport à une position prescrite.

Lesdits moyens 28 peuvent transmettre ce résultat par une liaison 11 à un dispositif non représenté, et notamment à un dispositif destiné à effectuer le recalage en position dudit aéronef A. A cet effet, on détermine le décalage de la position de l'aéronef dans le plan horizontal OXZ, ainsi qu'éventuellement les écartométries entre ledit aéronef A et une cible non représentée à atteindre par cet aéronef A.

On notera que ladite carte préétablie peut notamment être réalisée à partir d'une image prise par avion ou par satellite du territoire T, et elle comporte, pour permettre l'appariement, des segments préformés représentant des amers, c'est-à-dire des objets caractéristiques, fixes et visibles du territoire servant d'éléments de repère.

Ledit appariement consiste donc essentiellement à une identification d'amers entre la carte préétablie et l'image globale traitée. A cet effet, la carte préétablie doit comporter un nombre suffisant d'amers, diversement orientés et espacés le plus uniformément possible.

Le dispositif 1 conforme à l'invention, ainsi réalisé, présente de nombreux avantages, notamment :

- une fiabilité élevée,
- un coût réduit,
- une autonomie totale,
- une furtivité maximale, et
- une mise en oeuvre rapide et précise, notamment en raison du traitement immédiat des bandes imagées, dès leur génération, par lesdits moyens auxiliaires de traitement d'images 12.

## Revendications

1. Procédé pour déterminer un éventuel décalage de la position effective (P1) d'un aéronef (A) par rapport à une position prescrite, à partir d'une carte préétablie représentant au moins une partie (Z) du territoire survolé (T) par l'aéronef (A) et d'une image de ladite partie (Z) du territoire (T) formée par un générateur d'images (2) monté à bord dudit aéronef (A), selon lequel procédé :

   - on fait suivre à l'aéronef (A) une direction de vol (D) prédéfinie par rapport audit territoire survolé (T) ;
   - on détermine la vitesse ($\vec{V}$) et la hauteur (H) dudit aéronef (A) ;
   - en fonction de la vitesse ($\vec{V}$) et de la hauteur (H) ainsi déterminées, on effectue une pluralité de balayages successifs du territoire survolé (T), au moyen dudit générateur d'images (2), transversalement à ladite direction de vol (D), alternativement dans les deux sens, de sorte que ledit générateur d'images (2) engendre, lors de chaque balayage, une bande imagée telle que deux bandes imagées successives correspondent à deux zones adjacentes (Z1, Z2, Z3) dudit territoire (T) dans ladite direction de vol (D), et que les différentes zones (Z1, Z2, Z3) ainsi imagées représentent la partie (Z) du territoire à imager ;
   - pour chacune desdites bandes imagées ainsi engendrées, on effectue, au fur et à mesure de leur génération, un traitement d'images de manière à les rendre compatibles avec ladite carte préétablie, pour lequel traitement d'images on effectue un plaquage de segments obtenus à partir de contours de ladite bande imagée, contours qui correspondent aux transitions les plus importantes des niveaux de gris des pixels de la bande imagée correspondante, ledit plaquage consistant à placer lesdits segments dans un plan identique au plan de la carte préétablie, portant des segments semblables ;

   - on groupe ensemble les bandes imagées ainsi traitées de manière à former une image globale traitée ;
   - on effectue un appariement entre ladite image globale traitée et ladite carte préétablie, en mettant en correspondance lesdits segments de ladite image avec des segments semblables de la carte préétablie ; et
   - à partir dudit appariement, on détermine le cas échéant le décalage de la position effective (P1) dudit aéronef (A) par rapport à ladite position prescrite.

2. Procédé selon la revendication 1, **caractérisé en ce que**, lors du traitement d'images d'une bande imagée, pour déterminer lesdits segments, successivement :

   a) on effectue une extraction de contours de ladite bande imagée, les contours correspondant aux transitions les plus importantes des niveaux de gris des pixels de la bande imagée ;
   b) on effectue un seuillage de ladite bande imagée de manière à ne conserver que les contours dont le niveau de gris est supérieur à une valeur déterminée ;
   c) on effectue un chaînage consistant à relier ensemble les contours ainsi conservés ; et
   d) on effectue une polygonalisation afin de transformer lesdits contours en segments.

3. Procédé selon l'une quelconque des revendications précédentes, **caractérisé en ce que**, pour effectuer lesdits balayages, on détermine le site (α) et le débattement angulaire (β) de la ligne de visée (LV) dudit générateur d'images (2), en fonction de la hauteur (H) et de la vitesse ($\vec{V}$) de l'aéronef (A), de la vitesse et de la période de balayage dudit générateur d'images (2), et de la largeur (L) de la partie (Z) du territoire à imager, transversalement à la direction de vol (D).

4. Procédé selon l'une quelconque des revendications précédentes, **caractérisé en ce que** ladite direction de vol prédéfinie (D) de l'aéronef (A) est rectiligne et parallèle au plan moyen (OXZ) du territoire survolé (T).

5. Procédé selon l'une quelconque des revendications précédentes, **caractérisé en ce que** la vitesse ($\vec{V}$) de l'aéronef (A) est constante.

6. Procédé selon l'une quelconque des revendications précédentes, **caractérisé en ce que** ledit générateur d'images (2) est un senseur optronique permettant d'observer le territoire survolé (T) dans une bande spectrale déterminée.

**7.** Procédé selon la revendication 6, **caractérisé en ce que** ladite bande spectrale est située dans l'infrarouge.

**8.** Dispositif pour la mise en oeuvre du procédé spécifié sous l'une quelconque des revendications 1 à 7, ledit dispositif comportant :

- un générateur d'images (2) à balayage ;
- des premiers moyens de commande (3) pour faire suivre à l'aéronef (A) une direction de vol prédéfinie (D) ;
- des seconds moyens de commande (4) pour commander le balayage dudit générateur d'images (2) transversalement à la direction de vol (D) de l'aéronef (A) ; et
- une unité de traitement d'images (5) pour traiter les bandes imagées engendrées par le générateur d'images (2), ladite unité de traitement d'images (5) comportant des moyens de calcul (28) pour déterminer le cas échéant le décalage de la position effective (P1) de l'aéronef (A) par rapport à la position prescrite,

  **caractérisé en ce que** ladite unité d'images (5) comporte de plus :

- des moyens auxiliaires de traitement d'images (12) pour le traitement immédiat par segmentation, au fur et à mesure de leur génération, des bandes imagées engendrées par le générateur d'images (2) ;
- des moyens de groupement (22) pour grouper ensemble les bandes imagées traitées, en une image globale traitée ; et
- des moyens d'appariement (24) pour effectuer l'appariement entre ladite image globale traitée et la carte préétablie.

**9.** Dispositif selon la revendication 8, plus particulièrement pour la mise en oeuvre du procédé spécifié sous la revendication 2,
**caractérisé en ce que** lesdits moyens auxiliaires de traitement d'images (12) comportent :

- des moyens d'extraction de contours (13) ;
- des moyens de seuillage (14) ;
- des moyens de chaînage (16) ;
- des moyens de polygonalisation (18) ; et
- des moyens de plaquage (20).

**Patentansprüche**

**1.** Verfahren, um eine eventuelle Abweichung der Ist-Position (P1) eines Luftfahrzeugs (A) hinsichtlich einer vorgeschriebenen Position auf der Basis einer zuvor erstellten Karte, die zumindest einen Teil (Z) des von dem Luftfahrzeug (A) überflogenen Gebiets (T) wiedergibt, und eines Bildes des Teils (Z) des Gebiets (T), das von einem Bildgenerator (2) erzeugt wird, der an Bord des Luftfahrzeugs (A) eingebaut ist, zu ermitteln, demzufolge:

- man das Luftfahrzeug (A) einer bezüglich des überflogenen Gebiets (T) vordefinierten Flugrichtung (D) folgen lässt;
- die Geschwindigkeit ($\vec{V}$) und die Höhe (H) des Luftfahrzeugs (A) ermittelt werden;
- in Abhängigkeit von der so ermittelten Geschwindigkeit ($\vec{V}$) und Höhe (H) mittels des Bildgenerators (2) eine Mehrzahl von aufeinander folgenden Abtastungen des überflogenen Gebiets (T) quer zur Flugrichtung (D) und abwechselnd in den beiden Richtungen durchgeführt wird, so dass der Bildgenerator (2) bei jeder Abtastung einen Bildstreifen erzeugt, wobei zwei aufeinanderfolgende Bildstreifen zwei in der Flugrichtung (D) aneinander grenzenden Zonen (Z1, Z2, Z3) des Gebiets (T) entsprechen, und wobei die verschiedenen abgebildeten Zonen (Z1, Z2, Z3) den Teil (Z) des abzubildenden Gebiets darstellen;
- für jeden der so erzeugten Bildstreifen nach ihrer Erzeugung jeweils eine Bildverarbeitung durchgeführt wird, um sie kompatibel zu der zuvor erstellten Karte zu machen, wobei für die Bildverarbeitung eine Aufbringung von Segmenten durchgeführt wird, die auf der Basis von Konturen des Bildstreifens erhalten werden, wobei die Konturen den stärksten übergängen der Grauwerte der Bildpunkte des entsprechenden Bildstreifens entsprechen, wobei die Aufbringung darin besteht, die Segmente in einer Ebene zu platzieren, die identisch zu der Ebene der zuvor erstellten Karte ist, die ähnliche Segmente trägt;
- die so verarbeiteten Bildstreifen zusammengefasst werden, um ein verarbeitetes Gesamtbild zu formen;
- zwischen dem verarbeiteten Gesamtbild und der zuvor erstellten Karte eine Paarung durchgeführt wird, indem die Segmente des Bildes mit den ähnlichen Segmenten der zuvor erstellten Karte in Beziehung gesetzt werden; und
- auf der Basis der Paarung gegebenenfalls die Abweichung der Ist-Position (P1) des Luftfahrzeugs (A) bezüglich der vorgeschriebenen Position ermittelt wird.

**2.** Verfahren nach Anspruch 1, **dadurch gekennzeichnet, dass** bei der Bildverarbeitung eines Bildstreifens, zur Ermittlung der Segmente, nacheinander:

  a) eine Extrahierung von Konturen des Bildstreifens durchgeführt wird, wobei die Konturen den stärksten Übergängen der Grauwerte der Bildpunkte des entsprechenden Bildstreifens entsprechen;

b) ein Grenzwertvergleich des Bildstreifens durchgeführt wird, um nur die Konturen beizubehalten, deren Grauwert größer als ein bestimmter Wert ist;

c) eine Verkettung durchgeführt wird, die darin besteht, die so beibehaltenen Konturen miteinander zu verbinden; und

d) eine Polygonalisierung durchgeführt wird, um die Konturen in Segmente zu transformieren.

3. Verfahren nach einem der vorhergehenden Ansprüche, **dadurch gekennzeichnet, dass**, um die Abtastungen durchzuführen, der Ort ($\alpha$) und der Winkelausschlag ($\beta$) der Visierlinie (LV) des Bildgenerators (2) in Abhängigkeit von der Höhe (H) und der Geschwindigkeit ($\vec{V}$) des Luftfahrzeugs (A), der Abtastgeschwindigkeit und -periode des Bildgenerators (2) und der Breite (L) des Teils (Z) des abzubildenden Gebiets quer zur Flugrichtung (D) ermittelt wird.

4. Verfahren nach einem der vorhergehenden Ansprüche, **dadurch gekennzeichnet, dass** die vordefinierte Flugrichtung (D) des Luftfahrzeugs (A) geradlinig und parallel zur Mittelebene (OXZ) des überflogenen Gebiets (T) ist.

5. Verfahren nach einem der vorhergehenden Ansprüche, **dadurch gekennzeichnet, dass** die Geschwindigkeit ($\vec{V}$) des Luftfahrzeugs (A) konstant ist.

6. Verfahren nach einem der vorhergehenden Ansprüche, **dadurch gekennzeichnet, dass** der Bildgenerator (2) ein optronischer Sensor ist, der es gestattet, das überflogene Gebiet (T) in einem bestimmten Spektralband zu beobachten.

7. Verfahren nach Anspruch 6, **dadurch gekennzeichnet, dass** das Spektralband im Infraroten liegt.

8. Vorrichtung zur Durchführung des unter einem der Ansprüche 1 bis 7 spezifizierten Verfahrens, wobei die Vorrichtung folgendes umfasst:

- einen Abtastbildgenerator (2);
- erste Steuermittel (3), um das Luftfahrzeug (A) einer vordefinierten Flugrichtung (D) folgen zu lassen;
- zweite Steuermittel (4) zur Steuerung der Abtastung des Bildgenerators (2) quer zur Flugrichtung (D) des Luftfahrzeugs (A); und

- eine Bildverarbeitungseinheit (5) zur Verarbeitung der von dem Bildgenerator (2) erzeugten Bildstreifen, wobei die Bildverarbeitungseinheit (5) Rechnermittel (28) umfasst, um gegebenenfalls die Abweichung der Ist-Position (P1) des Luftfahrzeugs (A) bezüglich der vorgeschriebenen Position zu ermitteln,

**dadurch gekennzeichnet, dass** die Bildverarbeitungseinheit (5) zudem folgendes umfasst:

- Bildverarbeitungshilfsmittel (12) zur sofortigen Verarbeitung der durch den Bildgenerator (2) erzeugten Bildstreifen jeweils nach ihrer Erzeugung durch Segmentierung;
- Zusammenfassungsmittel (22), um die verarbeiteten Bildstreifen zu einem verarbeiteten Gesamtbild zusammenzufassen; und
- Paarungsmittel (24), um eine Paarung zwischen dem verarbeiteten Gesamtbild und der zuvor erstellten Karte durchzuführen.

9. Vorrichtung nach Anspruch 8, insbesondere zur Durchführung des unter Anspruch 2 spezifrzierten Verfahrens, **dadurch gekennzeichnet, dass** die Bildverarbeitungshilfsmittel (12) folgendes umfassen:

- Mittel zur Extrahierung von Konturen (13);
- Mittel zum Grenzwertvergleich (14);
- Verkettungsmittel (16);
- Polygonisierungsmittel (18); und
- Aufbringungsmittel (20).

**Claims**

1. Method for determining a possible shift of the actual position (P1) of an aircraft (A) with respect to a planned position, on the basis of a pre-established chart representing at least a part (Z) of the territory overflown (T) by the aircraft (A) and of an image of the said part (Z) of the territory (T) formed by an image generator (2) mounted on board the said aircraft (A), according to which method:

- the aircraft (A) is made to follow a predefined direction of flight (D) with respect to the said territory overflown (T);
- the velocity ($\vec{V}$) and the height (H) of the said aircraft (A) are determined;
- as a function of the velocity ($\vec{V}$) and of the height (H) thus determined, a plurality of successive scans of the territory overflown (T) are performed by means of the said image generator (2), transversely to the said direction of flight (D), alternately to and fro, so that the said image generator (2) produces, during each scan, an imaged strip such that two successive imaged strips correspond to two adjacent zones (Z1,Z2,Z3) of the said territory (T) in the said direction of flight (D), and that the various zones (Z1,Z2,Z3) thus imaged represent the part (Z) of the territory to be imaged;

- for each of the said imaged strips thus produced, an image processing is performed in tandem with their generation in such a way as to make them compatible with the said pre-established chart, for which image processing there is performed an overlaying of segments obtained on the basis of contours of the said imaged strip, which contours correspond to the biggest transitions of the grey levels of the pixels of the corresponding imaged strip, the said overlaying consisting in placing the said segments in a plane identical to the plane of the pre-established chart, carrying similar segments;

- the imaged strips thus processed are grouped together in such a way as to form a processed global image;

- a pairing is performed between the said processed global image and the said pre-established chart, by matching the said segments of the said image with similar segments of the pre-established chart; and

- on the basis of the said pairing, the shift, if any, of the actual position (P1) of the said aircraft (A) with respect to the said planned position is determined.

2. Method according to Claim 1, **characterized in that** during the image processing of an imaged strip, to determine the said segments, successively:

a) an extraction of contours of the said imaged strip is performed, the contours corresponding to the biggest transitions of the grey levels of the pixels of the imaged strip;
b) a thresholding of the said imaged strip is performed in such a way as to retain only the contours whose grey level is greater than a determined value;
c) a chaining is performed consisting in connecting together the contours thus retained; and
d) a polygonalization is performed so as to transform the said contours into segments.

3. Method according to any one of the preceding claims, **characterized in that**, to perform the said scans, the elevation ($\alpha$) and the angular deflection ($\beta$) of the line of sight (LV) of the said image generator (2) are determined as a function of the height (H) and of the velocity ($\vec{V}$) of the aircraft (A), of the velocity and of the period of scanning of the said image generator (2), and of the width (L) of the part (Z) of the territory to be imaged, transversely to the direction of flight (D).

4. Method according to any one of the preceding claims, **characterized in that** the said predefined direction of flight (D) of the aircraft (A) is straight and parallel to the mid-plane (OXZ) of the territory overflown (T).

5. Method according to any one of the preceding claims, **characterized in that** the velocity ($\vec{V}$) of the aircraft (A) is constant.

6. Method according to any one of the preceding claims, **characterized in that** the said image generator (2) is an optronic sensor making it possible to observe the territory overflown (T) in a determined spectral band.

7. Method according to Claim 6, **characterized in that** the said spectral band is situated in the infrared.

8. Device for the implementation of the method specified under any one of Claims 1 to 7, the said device comprising:

- a generator of images (2) to be scanned;
- first control means (3) for making the aircraft (A) follow a predefined direction of flight (D);
- second control means (4) for controlling the scanning of the said image generator (2) transversely to the direction of flight (D) of the aircraft (A); and
- an image processing unit (5) for processing the imaged strips produced by the image generator (2), the said image processing unit (5) comprising calculation means (28) for determining the shift, if any, of the actual position (P1) of the aircraft (A) with respect to the planned position,

**characterized in that** the said image unit (5) moreover comprises:

- auxiliary image processing means (12) for the immediate processing by segmentation, in tandem with their generation, of the imaged strips produced by the image generator (2);
- grouping means (22) for grouping together the processed imaged strips, into a processed global image; and
- pairing means (24) for performing the pairing between the said processed global image and the pre-established chart.

9. Device according to Claim 8, more especially for the implementation of the method specified under Claim 2,

**characterized in that** the said auxiliary image processing means (12) comprise:

- contour extraction means (13);
- thresholding means (14);
- chaining means (16);
- polygonalization means (18); and
- overlaying means (20).

## FIG.1

EP 0 785 414 B1

FIG.2

FIG.3